# EUROPEAN PATENT APPLICATION

(11) **EP 1 150 216 A2**
(43) Date of publication of application: **31.10.2001**
(21) Application number: 01303614.0
(22) Date of filing: 20.04.2001
(51) Int. Cl.: G06F 17/30

(54) **Retrieval system for casting information**

(30) Priority: 20.04.2000 JP 2000119902
(71) Applicant: GENERAL ELECTRIC COMPANY, Schenectady, NY 12345 (US)
(72) Inventor: Yamashita, Masaaki, Utsunomiya-shi, Tochigi-ken 321-4337 (JP); Kohyama, Masaki, Moka-shi, Tochigi-ken 321-4337 (JP)
(74) Representative: Szary, Anne Catherine, Dr.

(57) **Abstract**

The problem of the present invention is to provide a retrieval method and system for casting information in order to provide material for estimation of the origin of a defect of a casting.

The present invention comprises a computer system comprising the following: a database capable of classification of each datum according to a for-reference-use keyword and comprising data groups integrated together with corresponding for-reference-use keywords and data obtained by previous inspection-analysis; an input unit for input of a for-retrieval-use keyword relating to the casting in which the defect occurs; a CPU for retrieval from the database of a for-reference-use keyword corresponding to the for-retrieval-use keyword sent from input unit, and for extraction from the database of a datum relating to casting information containing the retrieved for-reference-use keyword; and an output unit for output of casting information based upon data sent from CPU.

## Description

The present invention relates to a method utilizing a computer system to retrieve casting information for use in estimating the origin of a defect by use of a database comprising information obtained by analysis-inspection of a defect occurring in a casting (i.e. information obtained by analysis of type, etc. of the defect-containing portion of the breakage surface).

Moreover, the present invention relates to a system for retrieval of casting information by a computer system using a database comprising information obtained by analysis-inspection of defects occurring in castings; wherein the system is used to obtain an estimate of the origin of the defect.

Castings, particularly plastic moldings, have been commercialized for various types of applications such as automotive parts, construction components, office equipment parts, home products, electrical equipment parts, medical products, optical products, and the like.

Control of the origin of defects in such products is important for quality control and for prevention of reoccurrence of defects.

Investigation of the origin of these defects was previously carried out when a defect occurred in a resin casting of a product, for example, by visual inspection, by touching by hand, etc. of the portion of the breakage surface where the crack occurred. Origin of the defect was estimated based upon past experience of the observer by use of a combination of morphology, casting composition, casting application, crack location, and the like.

However, since the above mentioned estimate results have a degree of commonality, improved precision, speed, and reproducibility of the estimate of the origin of the defect is anticipated if this common information is placed in a database.

However, the storage of information as the basis of forming a database is based upon subjective information of the estimation process, such as results of visual inspection of the breakage surface, experience of the person carrying out the inspection, etc. Using such subjective information to form a database for making an objective determination has been difficult.

However, the present invention has the object of providing a retrieval method and system thereof for casting information in order to provide material for estimation of the origin of the defect of a casting.

### BRIEF DESCRIPTION OF DRAWINGS

Figure 1 is a flow chart for explanation of the retrieval method of casting information of the present invention.
Figure 2 is a diagram for explanation of the method of construction of the database used by the present invention.
Figure 3 is a diagram for explanation of the method of construction of the database used by the present invention.
Figure 4 is a diagram of an embodiment of the input screen used during keyboard entry of the retrieval method for casting information of the present invention.
Figure 5 is a diagram of an embodiment showing retrieval results of the retrieval method for casting information of the present invention.
Figure 6 is a block diagram showing the first embodiment of the retrieval system for casting information of the present invention.
Figure 7 is a block diagram showing the second embodiment of the retrieval system for casting information of the present invention.

### Explanation of Item Numbers

| | |
|---|---|
| 1, 11 | computer system |
| 2, 12 | database |
| 3 | input unit |
| 4, 14 | CPU |
| 5, 15 | output unit |
| 6, 20 | RAM |
| 7 | ROM |
| 16 | RAM |
| 18 | CPU |
| 19 | memory unit |
| 21 | ROM |

The method of the present invention of retrieval of casting information from a computer system for inspection of a defect occurring within a casting for estimating the origin of the defect comprises the steps of: inputting of a for-retrieval-use keyword concerning a casting in which the defect occurs; retrieving from a prescribed database of a for-reference-use keyword corresponding to the for-retrieval-use keyword, and thereafter extracting from the database casting information including the retrieved for-reference-use keyword; and outputting of casting information based upon data obtained during the extraction step; wherein the database comprises data groups integrated together with corresponding for-reference-use keywords and data obtained by previous inspection-analysis; wherein each datum can be classified according to for-reference-use keyword.

According to the above mentioned retrieval method, an appropriate input means (i. e., a keyboard, etc.) of a computer system is used by the person (inspector) actually carrying out the inspection to input a for-retrieval-use keyword relating to the defect of the casting subject to inspection. During the extraction step, retrieval from the above mentioned database is carried out of a for-reference-use keyword corresponding to the for-retrieval-use keyword, and from the database are extracted data containing the retrieved for-reference-use keyword. During the output step, the extracted data are output as casting information by use of an output means such as an image display device, printer, and the like. Alternatively, such data can be output by storage upon an appropriate recording medium, etc., or such data can be output as casting information upon a transmission medium, etc. for transmission to an external computer system.

In this manner, information relating to inspection-analysis results of the casting can be classified beforehand by use of "for-reference-use" keywords. That is to say, for-reference-use keywords are specified, and information can be specified relating to the results of inspection-analysis of castings related to the specified for-reference-use keyword. Therefore past inspection results, which are subjective information dealing with how judgments were made when a defect occurred in the casting, become retrievable by use of objective for-reference-use keywords. Therefore the obtained information becomes an effective guide for investigation and for estimation of a treatment method for the defect of the casting presently under investigation.

The above mentioned casting information preferably comprises subjective data determined when the casting under inspection is selected and objective data comprising data obtained by uniform analysis of the casting under inspection.

Here the above mentioned subjective data are taken to mean data such as casting material, casting application, location where the defect occurs, condition of the defect, shipping destination of the casting, existence-type of secondary processing, and the like. The above mentioned objective data are taken to mean analysis data reporting testing and results thereof carried out to inspect the breakage surface where a crack occurred, the way such a crack was dealt with, and the like.

In this manner, since a single datum is formed associating the subjective data and the objective data, a database of casting information can be readily formed containing subjective data that were previously difficult to handle. Moreover, since objective data are used as keywords, referencing of subjective data becomes possible by using such keywords, and the database can be put into practical use with good efficiency.

Moreover, the above mentioned extraction step preferably is carried out from among a multiplicity of retrieval keywords that are associated in order of priority, and thereafter data are extracted containing the for-reference-use keyword coinciding with a for-retrieval-use keyword of lower priority.

In this manner, retrieval is carried out using a multiplicity of for-retrieval-use keywords. Therefore precision of retrieval improves. Furthermore, since an order of priority is associated with the for-retrieval-use keyword, extraction-retrieval is carried out for the higher priority for-retrieval-use keyword, followed thereafter by the lower priority for-retrieval-use keyword. Therefore narrowing-down retrieval becomes possible, and the desired casting information can be obtained with good efficiency.

Moreover, the method further comprises a step of judging whether or not the number of data extracted during the extraction step is within a prescribed range. When the number of such data are judged to not be within the prescribed range; and the for-retrieval-use keywords are edited, and thereafter re-retrieval is carried out.

By provision of the above mentioned judgment step, if the method of taking for-retrieval-use keywords is inappropriate so that a markedly high or low number of data are extracted, it becomes possible to revise the number of for-retrieval-use keywords, the order of priority of keywords, etc., and thereafter re-extraction can be performed. Therefore trials can continue with the order of priority being revised any number of times so as to make possible extraction of that portion of data capable of being trusted from among the common retrieval results.

Moreover, the above mentioned database is placed-distributed upon a network; and each of the various steps is carried out by at least one set of computer systems from among computer systems connected through the network to the database.

In this manner, a network can be used to connect together a multiplicity of computer systems to the above mentioned database. Therefore multiple computer systems at remote locations can possess the database in common.

Moreover, the above mentioned input step is preferably carried out by selecting from among a group of for-retrieval-use keywords having been previously prepared for each input category.

In this manner, a group of for-retrieval-use keywords that should be input is established beforehand. Therefore uniformity of the for-retrieval-use keywords can be expected. Therefore the above mentioned database can be used with good efficiency.

The present invention is a system for retrieval of casting information for inspection of a defect occurring in a casting and for retrieval of casting information used in order to estimate the origin of the defect; the retrieval system consisting of a computer system comprising the following: a database capable of classification of each datum according to a for-reference-use keyword and comprising data groups integrated together with corresponding for-reference-use keywords and data obtained by previous inspection-analysis; an input means for input of a for-retrieval-use keyword relating to the casting in which the defect occurs; an extraction means for retrieval from the database of a for-reference-use keyword corresponding to the for-retrieval-use keyword sent from the input means, and for extraction from the database of a datum relating to casting information containing the retrieved for-reference-use keyword; and an output means for output of casting information based upon data sent from the extraction means.

The above mentioned retrieval system for casting information contains a previously prepared database comprising groups of accumulated data of for-reference-use keywords and corresponding data obtained by past inspection-analysis relating to defects of castings.

The actual inspector uses an appropriate input means (i.e., a keyboard, etc.) of a computer system to input a for-retrieval-use keyword relating to a defect of the casting subject to inspection. The for-retrieval-use keyword is sent to the extraction means, and thereafter from the above mentioned database a for-reference-use keyword corresponding to the for-retrieval-use keyword is retrieved by the extraction means. These data are sent to the output means (i.e., an image display device, printer, etc.) and are output as casting information by use of the output means. Alternatively, such data can be output by storage upon an appropriate recording medium, etc., or such data can be output as casting information upon a transmission medium, etc. for transmission to an external computer system.

Moreover, the database is preferably placed-distributed upon a network; and a multiplicity of the computer systems are preferably connected through the network to the database.

In this manner, a multiplicity of computer systems can be connected through the network to the above mentioned database. Therefore joint use of the database by multiple computer systems at remote locations becomes possible.

Each of the above mentioned computer systems is preferably equipped with memory for storing data groups downloaded from the database, and the extraction means preferably carries out retrieval and extraction from the data groups stored in the memory based upon the for-retrieval-use keyword.

In this manner, since the computer system is provided with memory for temporarily taking up a downloaded portion or the entire data group within the database, less loading of the database system occurs. Moreover, after once taking up a data group, the computer system can then handle data internally, and after the download the computer system can be cut off in order to perform inspection or database maintenance.

Alternatively, the above mentioned database is preferably equipped with a handling means for extraction handling of prescribed data from the data group based upon the for-retrieval-use keyword sent from the extraction means.

In this manner, the database system is equipped with a handling means, extraction processing of data corresponding to the for-retrieval-use keyword is carried out, and data having undergone extracting processing are sent to the computer system. Therefore the number of components of the computer system can be decreased so that it becomes possible to anticipate a reduction in the size of the computer system.

Moreover, the above mentioned computer system is preferably equipped with a judgment means for judging whether or not the number of data extracted by the extraction means is within a prescribed range.

In this manner, when the number of extracted data are markedly high or low due to inappropriate taking of the for-retrieval-use keyword, the number of for-retrieval-use keywords, the order of priority of keywords, etc. can be revised, and re-extraction becomes possible. Therefore trials can be continued, for example, by revision of the order of priority so that extraction becomes possible from the common retrieval results of that portion of the data that is reliable.

The above mentioned casting information preferably comprises subjective data decided when the casting subject to inspection is determined and objective data comprising data obtained by uniform analysis of the casting subject to inspection.

Here the above mentioned subjective data are taken to mean data such as casting material, casting application, location where the defect occurs, condition of the defect, shipping destination of the casting, existence-type of secondary processing, and the like. The above mentioned objective data are taken to mean analysis data reporting testing and results thereof carried out to inspect the breakage surface where a crack occurred, the way such a crack was dealt with, and the like.

In this manner, since a single datum is formed associating the subjective data and the objective data, a database of casting information can be readily formed containing subjective data that were previously difficult to handle. Moreover, since objective data are used as keywords, retrieval of subjective data becomes possible by using such keywords, and the database can be put into practical use with good efficiency.

The method and system thereof for retrieval of casting information of the present invention are explained below in detail while referring to figures.

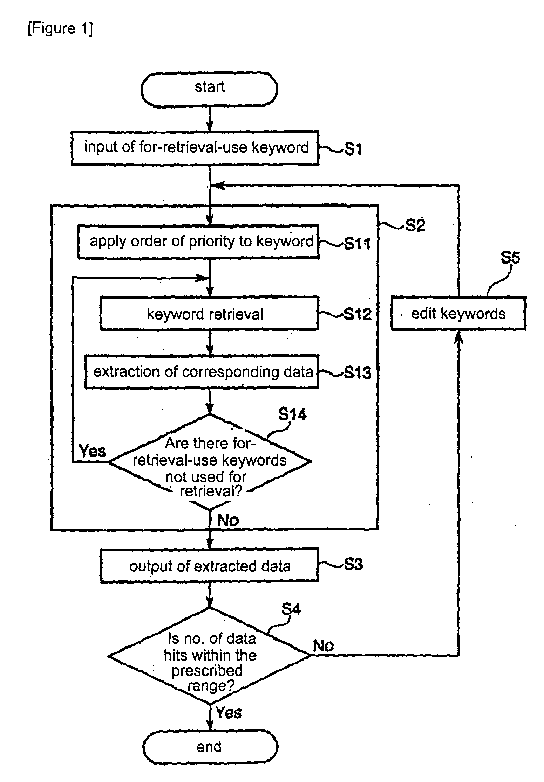

The method of retrieval of casting information, as shown in Figure 1, comprises: (step S1) inputting of a for-retrieval-use keyword relating to the defect (such as a crack, surface roughness caused by a problem during molding, discoloration, etc.); (step S2) retrieving from a prescribed database of a for-reference-use keyword corresponding to the above mentioned for-retrieval-use keyword, and outputting of extracted data relating to casting information including the retrieved for-reference-use keyword; and (step S3) outputting of casting information based upon data obtained during the above mentioned extraction step.

Moreover, the database used by this retrieval method is capable of classification of each datum according to a for-reference-use keyword and comprises data groups integrated together with corresponding for-reference-use keywords and data obtained by previous inspection-analysis.

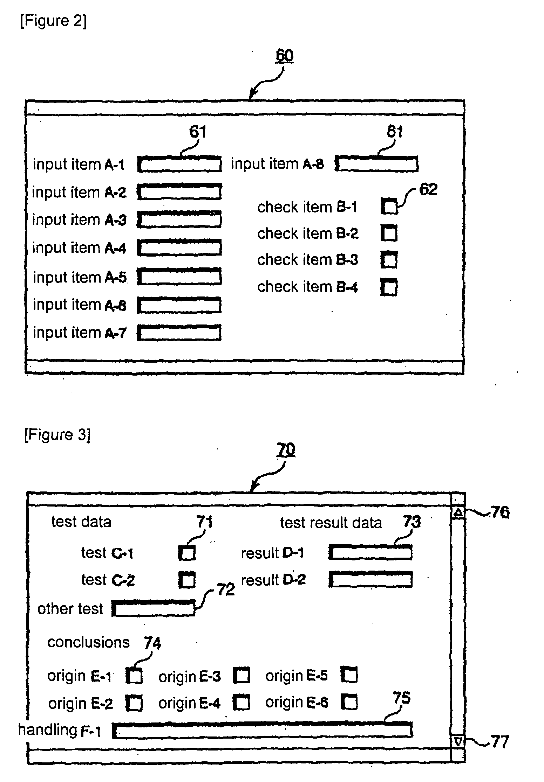

The above mentioned casting information preferably comprises subjective data determined when the casting subject to inspection is decided and objective data comprising data obtained by uniform analysis of the casting subject to inspection. An example of input of subjective data is shown in Figure 2. An example of input of objective data is shown in Figure 3.

Figure 2 shows one example of a display screen 60 equipped with respective input fields for input items A-1 through A-8 of casting information and check items B-1 through B-4 of information relating to production conditions of the casting.

Input items A-1 through A-8 are input into input fields 61 at previously determined locations; wherein such input items include datum number, datum recording day, casting material, casting application, location where the defect occurs, condition of the defect, shipping destination of the casting, existence-type of secondary processing, and the like.

Since data input into these input fields 61 are subjective, such input data can utilize expressions in a range previously recorded for each datum. For example, the casting material is a material name determined by one's own company or a product name determined by the material maker at the time of purchase. Moreover, the application of the casting is a name, etc. of a product manufactured using the casting. The existence or absence of secondary processing contains information as to whether the post-manufacturing casting has undergone processing such as painting, gluing, dissolution, and the like. Examples that can be suggested of the location at which the defect occurred include: during secondary processing after casting, such as during painting of the casting; during assembly using the casting, etc.; during a manufacturing step such as annealing of the casting, etc.; during shipment to the market; and the like. Condition of the defect indicates the degree to which the defect occurred. Examples that can be suggested of such data include frequency or infrequency of occurrence of the defect, etc.

Since these data are expressed using expressions within a previously recorded range, input may be done by use of a keyboard, etc. using input means to type an expression within a previously recorded range, and fields are provided corresponding to each input item. When this field is indicated by a pointer means (i.e., a mouse, light pen, cursor key, etc.), the previously recorded group of expressions is displayed, and then selection may be made from among this group of expressions by use of the pointer means.

Moreover, examples that can be suggested of check items B-1 through B4 include: whether the casting material includes recycled material; whether the casting during or after molding could possibly have acquired an adhering environmental agent such as a release agent, mold protection agent, oil, cleaning agent, etc.; whether casting conditions were appropriate; and the like. Each check item has a field 62 in which an "×", etc. symbol is input by clicking with the pointer, etc.

Furthermore, examples that can be suggested of the possibility of an adhering above-mentioned environmental agent include: the possibility that a release agent coating the metal mold during casting of the manufacturing process could have adhered to the casting; the possibility that thinner, paint, etc., if product painting occurred, could have adhered to the casting; the possibility that a cleaning agent used during use of the casting as a product could have adhered to the casting; and the like. Environmental agents often cause casting defects, such as cracks, when allowed to remain upon the surface of the mold.

Figure 3 shows a display screen 70 during input of objective data.

As test data relating to defects, fields 71 and 72 indicate whether or not prescribed testing has been conducted in order to inspect the breakage surface. Specifically, if prescribed tests C-1 and C-2 have been carried out, an "×", etc. symbol is input into the corresponding field 71, and if a test other than the listed C-1 through C-2 tests is carried out, the name of such a test is input into field 72. Examples that can be suggested of the C-1 through C-2 tests include: surface observation testing by means of an optical microscope or SEM (scanning electron microscope), MPI testing, IR testing, residual stress testing, Dynstat impact testing, environmental testing, and the like. Furthermore, when the number of prescribed tests is three or more, of course the fields 72 of tests C-1, C-2, C-3 ... can be increased appropriately.

Here surface inspection testing by means of an optical microscope or SEM is testing by direct observation of the breakage surface. Results corresponding to this testing are input into field 73 by inputting of expressions indicating condition of the surface such as shape of the breakage surface, morphology of the break propagation point, etc. Furthermore, nearly all surface conditions fall into previously assumed categories. Therefore these terms may be selected from a group of previously entered expressions.

MFI testing is based, for example, upon ASTM D1238, and measures melt flow index (MFI) as an indicator of damage to a casting. If the casting is judged to be inferior, such inferiority is indicated by input into the field 73 which corresponds to the results of this test.

IR testing determines by an infrared spectrometer whether the casting contains a different kind of casting material mixed therein. The basis of this test is the characteristic infrared absorption line wavelengths of various materials. If a question exists as to whether another type of material has been intermixed, this is indicated by input into the field 73 which corresponds to results of this test.

Residual stress testing investigates the level of internal stress within the casting. Specifically, the casting is immersed in a prescribed organic solvent determined by the type casting, and time period is measured until the generation of defects (cracks) in the casting. This time period shortens as the interior stress level increases. A high internal stress is thought to indicate a casting readily affected by environmental agents since attached environmental agents then cause defects such as cracks, surface irregularities, etc. Furthermore, results of this test are entered into the corresponding field 73 by entering whether the internal stress level is high or low.

Dynstat impact testing is based, for example, upon BS1330, and is an impact test performed upon a test sample cut out from the casting. Specifically, a test sample is cut out of a defect-free casting, and testing is carried out upon the test sample. The obtained energy value is compared. If the energy value of a test sample obtained from a defect-containing casting is lower than the energy value of a test sample obtained from a defect-free sample, it is judged that weakening has occurred in the defect-containing casting. If the casting is judged to be inferior, such inferiority is indicated by input into the field 73 which corresponds to the results of this test.

Environmental testing examines resistance to chemicals. Specifically, a prescribed deformation is applied to a test sample used in ASTM IZOD testing. The previously mentioned environmental agent that is actually used or that might possibly become attached to the casting is then applied. After a prescribed time period has passed, the test sample is examined visually to see whether a defect has occurred in the test sample or whether the casting surface has whitened or become discolored. Information is obtained in order to judge whether or not the applied environmental agent can be used with the casting, or whether or not the environmental agent can be linked to defects. Furthermore, results of this test are entered into the corresponding field 73 by input of the environmental agent applied to the casting and the effect imparted within the applied deformation.

In addition, the state of the breakage surface may be actually photographed, and the photograph may be incorporated as image data.

Fields 74 and 75 indicate data relating to conclusions determined from the above mentioned test data relating to defects, and if usage is possible, also breakage surface image data. Moreover, the conclusion data obtained in this manner are an objective result of the person inputting data. Origins of the defect are listed in fields 74. Respective originating items corresponding to the defect are indicated by input of an "×", etc. symbol in fields 74 (origin E-1 through E-6). Examples that can be suggesting of originating items include attachment of an environmental agent, weakening, pressure, design, molding pressure, molding condition, secondary processing, and the like. Field 75 indicates an action taken at the time of data entry or a suggestion for encounters of a similar event (such as changing of an utilized environmental agent, setting of molding conditions so as to avoid damage, investigation of processing that would change stress, etc.). Moreover, if data can not be entirely displayed upon the screen, display is possible by use of scroll buttons 76 and 77 to scroll the displayed position.

Figure 2 and Figure 3 each show just one example of display screens. The number of items of input, input items, etc. and number of data (i.e., the number of fields) can be altered appropriately. Moreover, investigation information was input into field 73 directly extracted from results obtained by test items (tests C-1, etc.) checked in field 72. However, the present invention is not limited to this case. Entry is also possible of just data obtained by testing or of just investigation information. Alternatively joint entry is also possible of both types of data.

Although forming a database of such objective data alone is unsuitable for handling of subjective information, a database can be formed by relating such objective data to the above mentioned subjective data. For example, a for-retrieval-use address is assigned for each subjective datum in the database. This address specifies a storage location of a subjective datum. Then the database is constructed so that related objective data can be extracted when the address of each subjective datum is specified. Due to this construction, casting information can be effectively formed into a database, objective data can be retrieved based upon subjective data in the form of a keyword, and the database can be utilized efficiently.

Moreover, the above mentioned database may be directly connected to a computer system. Computer systems may be placed-distributed upon a network, and the computer systems may also be connected through a network to the database.

In this manner, multiple computer systems can connect to the database through the network so that multiple remote computer systems can jointly use the database.

The person (inspector) actually carrying out the investigation during step S1 uses an appropriate input means such as a pointer, etc. (i.e., keyboard, mouse, light pen, cursor key, etc.) to input at least one for-retrieval-use keyword relating to the defect of the casting subject to investigation. Thereafter execution proceeds to step S2. This for-retrieval-use keyword corresponds to the above mentioned subjective data.

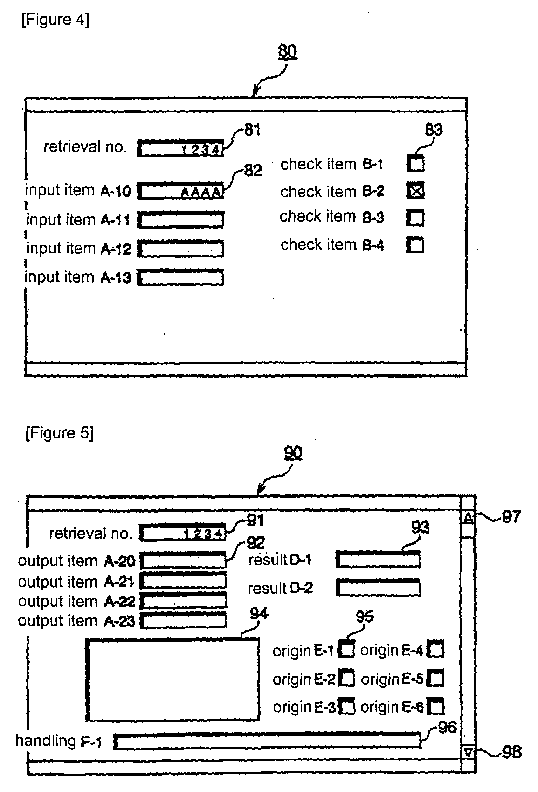

Specifically, as shown in Figure 4, field 81 indicates a retrieval number within an input display screen 80. This becomes an ID number used for subsequently learning of retrieval results relating to the same contents. This column may indicate a number that increases with an increasing number of retrievals. This column may also be set arbitrarily by the inspector. However, when the column value can be set arbitrarily, entry is not permissible using a retrieval number identical to that of a previous retrieval number.

Information relating to the casting under investigation is input into input items A-10 through A-13 of fields 82. Examples that can be suggested of such information include casting material, casting application, location of occurrence of the defect, defect condition, existence-type of secondary processing, and the like. That is to say, these information are data corresponding to a portion of input items A-1 through A-8 of the above mentioned display screen 60 of the database as shown in Figure 2. Fields 83 correspond to check items B-1 through B-4 of the above mentioned display screen 60.

Only items capable of input are input into fields 82. However, at least one more necessary input datum is provided among data input into fields 82. Moreover, only the corresponding check item "×", etc. symbol can be input into fields 83. These input information items are all used as for-retrieval-use keywords.

Moreover, data input into field 82 is preferably selected from among a group of terms recorded beforehand during construction of the above mentioned database. In this manner, since the group of for-retrieval-use keywords that should be input is previously set, the input procedure is simplified, and the for-retrieval-use keywords can be made uniform. Therefore the above mentioned database can be used efficiently.

Just one example of the input display screen is shown in Figure 4. Appropriate alteration is possible of the input items to be input and the number or data (number of fields).

Furthermore, the method of inputting by selection from among this group of keywords may be typing of input. Alternatively, a field may be provided corresponding to each input item upon the above mentioned type of display screen, wherein a keyword group is displayed when this field is indicated by the pointer. Thereafter the pointer is used for selection from among the keywords.

The for-reference-use keyword corresponding to the above mentioned for-retrieval-use keyword of step S2 is retrieved from the above mentioned database (step S12), and data including the retrieved for-reference-use keyword are extracted from the database (step S13).

Moreover, although retrieval of casting information can be carried out even if only a single for-retrieval-use keyword is used, retrieval can also be carried out using multiple for-retrieval-use keywords. That is to say, retrieval can be carried out by input of data into multiple fields 82 of input display screen 80 as shown in Figure 4. When multiple for-retrieval-use keywords are used for retrieval, as shown in Figure 1, an order of priority is preferably applied to the for-retrieval-use keyword (step S11).

Within step S11, the inspector inputs which for-retrieval-use keyword has priority for use among the inputted for-retrieval-use keywords. If no input occurs here, order of priority is assigned and retrieval is carried out according to a previously programmed order of priority, and thereafter execution proceeds to step S12.

Here a single highest order of priority for-retrieval-use keyword is preferably selected from among input items A-10 through A-13. The order of the second and below priorities is determined from data of the remaining fields 82 and all information of fields 83. However, cases also exist when it is permissible to use the check item data of check items B-1 through B-4 for assignment of the highest priority for-retrieval-use keyword.

During step S12, the for-reference-use keyword corresponding to the for-retrieval-use keyword of highest priority is retrieved from the above mentioned database, and execution proceeds to step S13. Within step S13, the above mentioned for-reference-use keyword is used to classify data groups among the above mentioned database, and data having this for-reference-use keyword using a previously allocated address (i.e., subjective data and objective data associated with this for-reference-use keyword) are all extracted, and execution proceeds to step S14.

During step S14, judgment is made as to whether or not an unused for-retrieval-use keyword exists. If the results of this judgment is "NO" (i.e., all for-retrieval-use keywords are judged to have been used), then execution proceeds to step S3. However, if the result of this judgment is "YES" (i.e., an unused for-retrieval-use keyword exists), then execution returns to step S12, and another retrieval begins of the for-reference-use keyword.

Depending upon the results of the judgment of step S14, if the retrieval of step S12 is repeated, after data are first extracted during step S13, thereafter retrieval is preferably carried out of the for-reference-use keyword corresponding to the for-retrieval-use keyword next in order of preference.

In this manner, the order of preference is applied to the for-retrieval-use keywords, and further data retrieval is carried out for the for-retrieval-use keyword of lower priority after retrieval for the for-retrieval-use keyword of higher priority. Therefore narrowing-down retrieval becomes possible, and the desired casting information can be obtained with good efficiency.

Moreover, the extracted data during step S3, is output as casting information by use of an output means such as an image display device, printer, and the like. Moreover, if an appropriate recording medium, etc. exists for storage of this data, casting information is output upon the recording medium, etc. Furthermore, if the database is placed upon a network as previously described, and if multiple computer systems are connected to this database, casting information is output upon a transmission medium (i.e., network, etc.) to the external computer systems, and execution proceeds to step S4.

Here Figure 5 shows just one example of a display screen when display occurs upon an image display device. The contents and number of data displayed (i.e., number of fields) can be altered appropriately.

Within the results display screen 90 of Figure 5, fields 92 as output items A-20 through A-23 are provided for output of data of fields in which input data exist from among subjective data extracted during step S3 (i.e., among fields 61 of input items A-1 through A-8 within display screen 60 of the above mentioned Figure 2).

Moreover, in addition to subjective data within display screen 90, objective data are also displayed as shown in Figure 3. Within fields 93 showing results D-1 and D-2, data are displayed of the above mentioned field 73 occurring in display screen 70 of Figure 3. If field 94 can be used, then image data of the breakage surface are displayed. Within fields 95 displaying origin items E-1 through E-6, the previously mentioned "×", etc. symbol is displayed which is the above mentioned data of field 74 of Figure 3. Furthermore, if all information can not be contained within the screen, display contents can be scrolled up or down by use of scroll buttons 97 and 98.

The display screen shown in Figure 5 has both groups of retrieved-extracted subjective data and objective data. In this manner, all groups of extracted data occur on the screen.

During step S4 judgment is made as to whether or not the number of data extracted during step S2 is within a prescribed range. This prescribed range is indicated by an upper limit such as a specific count such as 10 data, 100 data, etc. This upper limit may be set arbitrarily by the inspector or may be a previously fixed value. Furthermore, although a lower limit is not particularly necessary, a lower limit can be set as required.

If the result of this judgment is "YES" (the number of data extracted during step S2 is within the above described prescribed range), then execution terminates. In this manner, objective data are considered among the obtained casting information, the origin of the casting defect is estimated, and information is selected for deciding handling of the casting defect.

Moreover, if the result of this judgment is "NO" (the number of data extracted during step S2 is not within the above described prescribed range), execution proceeds to step S5.

For-retrieval-use keywords input during step S1 are edited during step S5. Specifically, the for-retrieval-use keywords are amended or revised, and thereafter execution proceeds to step S2 (step S11). If execution proceeds to step S11 after the editing of step S5, the previously assigned orders or priority are newly set, and orders of priority are revised if for-retrieval-use keyword appending-revision did not occur during the above mentioned editing.

In this manner, due to the provision of steps S4 and S5, if the manner of taking for-retrieval-use keywords is inappropriate so that the number of extracted data is markedly large or small, the number, order of priority, etc. of the for-retrieval-use keywords can be revised, and then re-extraction can be carried out. Therefore trial revisions of the order of priority can be carried out any number of times so that extraction becomes possible of data from the reliable portion of the common retrieval results.

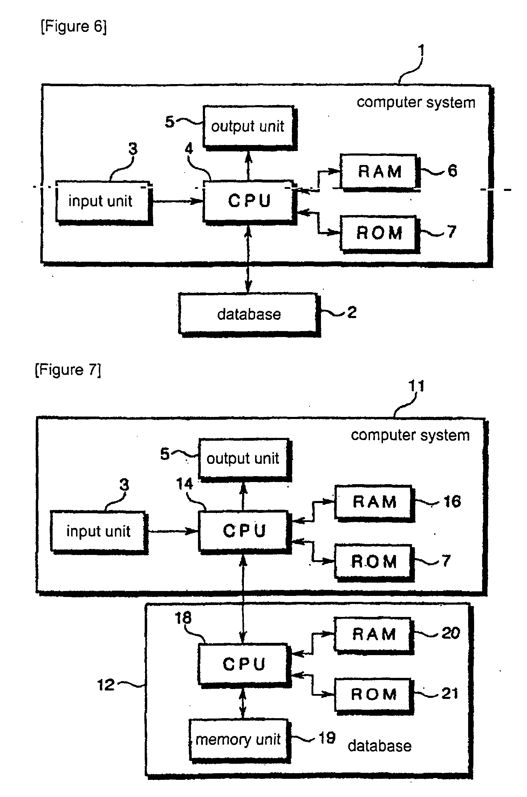

A first embodiment of the retrieval system of casting information of the present invention, as shown in Figure 6, comprises: a database 2 capable of classification of each datum according to the for-reference-use keywords, and formed from stored data groups associating for-reference-use keywords and data obtained by past investigation-analysis of defects of castings; an input unit 3 for input of a for-retrieval-use keyword relating to the casting in which the defect occurs; a CPU (central processing unit) 4 as an extraction means for extraction from database 2 of data relating to casting information included with the retrieved for-reference-use keyword after retrieval from database 2 of the for-reference-use keyword corresponding to the for-reference-use keyword sent from input unit 3; and a computer system 1 equipped with an output unit 5 for output of casting information based upon data sent from CPU 4.

Each component is explained below. Operation of each component within Figure 1 is indicated by a step number within parenthesis.

A computer system 1 is equipped, as shown in Figure 6, with input unit 3, CPU 4, output unit 5, a random access memory (RAM) 6, and a regeneration [sic]-only memory (ROM) 7, and as may be required, other components that may be necessary for operation, such as an interface, modem, etc. connected to the database.

Database 2 stores casting information associating subjective data and objective data corresponding to the above mentioned for-reference-use keyword. This database 2, even if an external memory storage device is used such as a normal hard disk device, etc., is placed adjacent to computer system 1 and is connected thereto.

Moreover, database 2 is preferably placed-distributed upon a network, and multiple computer systems 1 are preferably connected to database 2 through this network. In this manner, multiple computer systems 1 can be connected via the network to database 2. Therefore joint use becomes possible of database 2 by multiple computer systems at remote locations.

Input unit 3 is a pointer, etc. such as a keyboard, mouse, light pen, cursor key, and the like. The actual inspector uses input unit 3 to input subjective data relating to the defect of the casting subject to investigation (i.e., input of the for-retrieval-use keyword (step S1)). Furthermore, this input unit 3 is also used for assignment of order or priority of the for-retrieval-use keyword during the above mentioned step S11.

According to a program stored in ROM 7, CPU 4 utilizes an operating region within a portion of RAM 6 to retrieve from database 2 the for-reference-use keyword corresponding to the for-retrieval-use keyword sent from input unit 3, extracts from database 2 data including the retrieved for-reference-use keyword (step S2), and performs output to output unit 5.

That is to say, a portion of the entire stored data group is downloaded from database 2 and is stored in RAM 6. Thereafter the data group is retrieved within RAM 6 of the for-reference-use keyword corresponding to the for-retrieval-use keyword input by input unit 3 (step S12). Therefore data associated with the retrieved for-reference-use keyword (both the subjective data and the objective data associated with this for-reference-use keyword) are extracted (step S13).

Moreover, when retrieval is carried out using multiple for-retrieval-use keywords, after the desired data are extracted for the for-retrieval-use keyword of highest order of priority, whether or not unused for-retrieval-use keywords exist is judged (step S14), and the for-retrieval-use keyword next in order of priority is used, after extraction of data using the for-retrieval-use keyword of highest priority, to perform further narrowing-down data extraction. In this manner, data extraction is repeated using for-retrieval-use keywords of decreasing order of priority until all data extraction has been performed using all for-retrieval-use keywords as for-reference-use keywords are repeatedly retrieved (step S12) and data having these for-retrieval-use keywords are repeatedly extracted (step S13).

Output unit 5 is an image display device, printer, data storage device, data transfer device, etc. For example, if an image display device is used, the extracted data as casting information are displayed on display screen 90 of Figure 5 (step S3). Image display device 90 in the same manner can be a printer capable of output.

Moreover, if data sent from CPU 4 are stored upon an appropriate recording medium, casting information is output as the recording medium, etc. Moreover, if database 2 is placed upon a network as previously mentioned, and if multiple computer systems 1 are connected to this database 2, output of casting information occurs to the external computer system via a transmission medium such as a network, etc.

Moreover, setting of an appropriate extraction data number in ROM 7 is done by the operator using input unit 3 to set this number. Therefore whether the number of finally extracted data is within this set range or not is judged by CPU 4 (step S4). If the extracted data count is not within the set range, this fact is communicated to the inspector by display, etc. by output unit 5, and editing of the for-retrieval-use keywords (step S5) and order-of-priority revision are requested.

Since such a judgment is made, if the number of extracted data is markedly large or small due to taking of the for-retrieval-use keyword in an inappropriate manner, the number of for-retrieval-use keywords, order of priority, etc. can be revised, and re-extraction can be carried out. Therefore even after repeated trials revising the order or priority, extraction becomes possible from the common retrieval results of that portion of the data that is reliable.

Moreover, RAM 6 within computer system 1 temporarily incorporates a portion or the entire data group downloaded from database 2. Therefore the load placed upon database 2 can be decreased. This is particularly effective if multiple computer systems are connected. Moreover, after a data group is taken up once, the data are thereafter handled within computer system 1. Therefore cutting off is possible for maintenance, inspection, etc. of database 2 after the download.

A second embodiment of the retrieval system of casting information relating to defects of a casting of the present invention, as shown in Figure 7, comprises: a database 12 capable of classification of each datum according to the for-reference-use keywords, and formed from stored data groups associating for-reference-use keywords and data obtained by past investigation-analysis of defects of castings; an input unit 3 for input of a for-retrieval-use keyword relating to the casting in which the defect occurs; a CPU (central processing unit) 14 as an extraction means for extraction from database 2 of data relating to casting information included with a retrieved for-reference-use keyword after retrieval from database 2 of the for-reference-use keyword corresponding to the for-reference-use keyword sent from input unit 3; and a computer system 11 equipped with an output unit 5 for output of casting information based upon data sent from CPU 14.

Each component is explained below. Operation of each component within Figure 1 is indicated by a step number within parenthesis. Moreover, those items that occur in Figure 6 are given the same item number as that of Figure 6 [sic], and explanation of such items is omitted.

A computer system 11 is equipped, as shown by Figure 7, with input unit 3, CPU 14, output unit 5, random access memory (RAM) 16, and regeneration [sic]-only memory (ROM) 7, and as may be required, other components that may be necessary for operation, such as an interface, modem, etc. connected to the database.

Database 12 is equipped with a memory unit 19 for storage of casting information associating subjective data and objective data corresponding to the above mentioned for-reference-use keyword.

This database 12 is placed-distributed upon a network, and multiple computer systems 11 are connected to database 12 through this network. In this manner, multiple computer systems 11 can be connected to database 2 [sic] so that common use becomes possible of database 12 by multiple computer systems 1 at remote locations.

Furthermore, database 12, based upon the for-retrieval-use keyword send from the below described CPU 14, is equipped with a CPU 18 as a handling means for handling of extraction of prescribed data from the above mentioned data group.

This CPU 18, according to a program stored in ROM 21, utilizes a portion of RAM 20 as an operating region to retrieve from within a memory unit 19 the for-reference-use keyword corresponding to the for-retrieval-use keyword sent from CPU 14, extracts from memory unit 19 data including the retrieved for-reference-use keyword (step S2), and performs output to CPU 14.

That is to say, the for-reference-use keyword corresponding to the for-retrieval-use keyword send from CPU 14 and input via input unit 3 (step S1) is used for retrieval of a data group of memory unit 19 (step S12). Therefore data associated with the retrieved for-reference-use keyword (both the subjective data and the objective data associated with this for-reference-use keyword) are extracted (step S13).

Moreover, when retrieval is carried out using multiple for-retrieval-use keywords, after the desired data are extracted for the for-retrieval-use keyword of highest order of priority, whether or not unused for-retrieval-use keywords exist is judged (step S14), and the for-retrieval-use keyword next in order of priority is used, after extraction of data using the for-retrieval-use keyword of highest priority, to perform further narrowing-down data extraction. In this manner, data extraction is repeated using for-retrieval-use keywords of decreasing order of priority until all data extraction has been performed using all for-retrieval-use keywords as for-reference-use keywords are repeatedly retrieved (step S12) and data having these for-retrieval-use keywords are repeatedly extracted (step S13).

According to the program stored in ROM 7, CPU 14 operates a portion of RAM 16 as an operating region by first sending data to CPU 18 relating to the for-retrieval-use keyword and order of priority thereof sent from input unit 3 to CPU 18 of database 12. Thereafter extracted data sent from this CPU 18 are taken up temporarily by RAM 16.

Moreover, CPU 14 sends this extracted data to output unit 5, judges whether or not the number of extracted data is within a range set appropriately for ROM 7, and judges whether or not the number of extracted data is within a range set by the inspector by input via input unit 3 (step S4). If the extracted data count is not within the set range, this fact is communicated to the inspector by display, etc. by output unit 5, and editing of the for-retrieval-use keyword (step S5) and order-of-priority revision are requested.

Since such a judgment is made, if the number of extracted data is markedly large or small due to taking of the for-retrieval-use keyword in an inappropriate manner, the number of for-retrieval-use keywords, order of priority, etc. can be revised, and re-extraction can be carried out. Therefore even after repeated trials revising the order or priority, extraction becomes possible from the common retrieval results of that portion of the data that is reliable.

The second embodiment, as shown in Figure 7, is constructed so that CPU 18 is provided at database 12, and extraction handling of data in response to the for-retrieval-use keyword is carried out prior to sending of extraction handled data to computer system 11. Therefore the number of components of computer system 11 can be reduced, and reduction in the size of computer system 11 becomes possible.

As explained previously, the retrieval method and system for casting information according to the present invention can classify beforehand information relating to inspection-analysis results of the casting by use of a "for-reference-use" keyword. Therefore, when a defect occurs in the casting, past inspection results (how to interpret, handle, etc. such a defect) which are objective information become retrievable using subjective for-reference-use keywords, and the obtained information becomes an effective indicator for estimating the origin and handling method for a defect of the casting presently under consideration.

Furthermore, it is understood that composition can be appropriately altered within the scope of the present invention as long as such alteration is consistent with the object of the present invention.

Per the present invention, casting information, which was formerly difficult to form into a database, can be formed into a database. From this database it becomes possible to provide subjective judgment material when estimating the origin of a defect. Therefore precision, speed, and reproducibility of the estimation of the origin of a defect of a casting can be improved.

## Claims

1. A method of retrieval of casting information from a computer system for inspection of a defect occurring within a casting for estimating the origin of the defect; the method comprising the steps of:
inputting of a for-retrieval-use keyword concerning a casting in which the defect occurs;
retrieving from a prescribed database of a for-reference-use keyword corresponding to the for-retrieval-use keyword, and thereafter extracting from the database casting information including the retrieved for-reference-use keyword; and
outputting of casting information based upon data obtained during the extraction step;
wherein the database comprises data groups integrated together with corresponding for-reference-use keywords and data obtained by previous inspection-analysis; wherein each datum can be classified according to for-reference-use keyword.

2. The method of retrieval of casting information according to claim 1; wherein the casting information comprises objective data comprising data obtained by uniform analysis of the casting under inspection and subjective data determined when deciding the casting to be inspected.

3. The method of retrieval of casting information according to claim 1; wherein during the extraction step extraction is carried out from among a multiplicity of retrieval keywords that are associated in order of priority, and thereafter data are extracted containing the for-reference-use keyword coinciding with a for-retrieval-use keyword of lower priority.

4. The method of retrieval of casting information according to claim 1; wherein the extraction step further comprises:
deciding whether or not the number of data extracted during the extraction step is within a prescribed range; and if the number of such data is judged to not be within the prescribed range; and
editing of the for-retrieval-use keywords, and thereafter carrying out re-retrieval.

5. The method of retrieval of casting information according to claim 1; wherein the database is placed-distributed upon a network; and each of the various steps is carried out by at least one set of computer systems from among computer systems connected through the network to the database.

6. The method of retrieval of casting information according to claim 1; wherein the input step is carried out by selecting from among a group of for-retrieval-use keywords having been previously prepared for each input category.

7. A retrieval system of casting information for inspection of a defect occurring in a casting and for retrieval of casting information used in order to estimate the origin of the defect; the retrieval system comprising a computer system comprising the following:
a database capable of classification of each datum according to a for-reference-use keyword and comprising data groups integrated together with corresponding for-reference-use keywords and data obtained by previous inspection-analysis;
an input means for input of a for-retrieval-use keyword relating to the casting in which the defect occurs;
an extraction means for retrieval from the database of a for-reference-use keyword corresponding to the for-retrieval-use keyword sent from the input means, and for extraction from the database of a datum relating to casting information containing the retrieved for-reference-use keyword; and
an output means for output of casting information based upon data sent from the extraction means.

8. The retrieval system of casting information according to claim 7; wherein the database is placed-distributed upon a network; and a multiplicity of the computer systems are connected through the network to the database.

9. The retrieval system of casting information according to claim 7; wherein each of the computer systems is equipped with memory for storing data groups downloaded from the database; and the extraction means carries out retrieval and extraction from the data groups stored in the memory based upon the for-retrieval-use keyword.

10. The retrieval system of casting information according to claim 7; wherein the database is equipped with a handling means for extraction handling of prescribed data from the data group based upon the for-retrieval-use keyword sent from the extraction means.

11. The retrieval system of casting information according to claim 7; wherein the computer system is equipped with a judgment means for judging whether or not the number of data extracted by the extraction means is within a prescribed range.

12. The retrieval system of casting information according to claim 7; wherein the casting information comprises subjective data determining when the casting subject to inspection is decided and objective data comprising data obtained by uniform analysis of the casting subject to inspection.
